(19) Europäisches Patentamt
European Patent Office
Office européen des brevets

(11) **EP 4 306 597 A1**

(12) **EUROPEAN PATENT APPLICATION**
published in accordance with Art. 153(4) EPC

(43) Date of publication:
**17.01.2024 Bulletin 2024/03**

(21) Application number: **22883892.6**

(22) Date of filing: **14.10.2022**

(51) International Patent Classification (IPC):
**C09C 1/48** (2006.01)    **C09C 1/56** (2006.01)

(52) Cooperative Patent Classification (CPC):
**C09C 1/48; C09C 1/56;** Y02E 60/50

(86) International application number:
**PCT/KR2022/015602**

(87) International publication number:
**WO 2023/068669 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.10.2021 KR 20210140536**

(71) Applicant: OCI Company Ltd.
**Seoul 04532 (KR)**

(72) Inventors:
• PARK, Jaeheung
**Seongnam-si Gyeonggi-do 13212 (KR)**
• LEE, Jaeseok
**Seongnam-si Gyeonggi-do 13212 (KR)**

(74) Representative: **Zacco Sweden AB**
**P.O. Box 5581**
**Löjtnantsgatan 21**
**114 85 Stockholm (SE)**

(54) **HIGHLY CRYSTALLINE CARBON BLACK AND PREPARATION METHOD THEREFOR**

(57)    The present invention relates to a highly crystalline carbon black and a preparation method therefor and, more specifically, to a highly crystalline carbon black and a preparation method therefor, wherein the carbon black can be used as a fuel cell catalyst carrier requiring a high level of durability and a conductive material for various batteries including secondary batteries. More specifically, the present invention provides: a highly crystalline carbon black having a crystallite size Lc of 4.0 nm or more, a specific surface area (BET) of 50-150 m2/g, and an oil absorption number (OAN) of 150 ml/100 g or more; and a preparation method therefor.

FIG. 1

**10**

EP 4 306 597 A1

**Description**

**FIELD**

The present disclosure relates to carbon black having high crystallinity and a preparation method thereof. More specifically, the present disclosure relates to carbon black having high crystallinity that may be used as a fuel cell catalyst carrier, and a conductive material for various batteries including secondary batteries that require a high level of tolerance, and a method of preparing the same.

**DESCRIPTION OF RELATED ART**

Carbon black refers to an aggregate of very fine spherical particles obtained by incomplete combustion of compounds containing hydrocarbons or carbon. Carbon black is converted to primary particles in a reaction furnace, and these primary particles fuse together to form aggregates in a shape of grape bunches. In this regard, types of carbon black may be broadly classified into acetylene black and furnace black. The furnace black has the advantage of low cost. However, the furnace black has the disadvantage that it is difficult to achieve high crystallinity compared to acetylene black.

Carbon black affects the quality of the material employing the same depending on physical properties thereof. The physical properties thereof include crystallinity, a specific surface area, a structure, and a particle size, and the properties of the carbon black may be adjusted via various post-treatments. Carbon black is used in various fields such as industrial paint, coating composition, and various printed materials. Because carbon black can have electrical properties, carbon black is also used as a conductive material.

Fuel cells have recently become popular due to eco-friendly energy. In this regard, carbon black as a carbon material is widely used as a catalyst carrier to support a catalyst (for example, platinum catalyst) of the fuel cell. In this regard, when, in driving a fuel cell electric vehicle, supply of hydrogen as the fuel to an anode (also referred to as 'a fuel electrode' or 'a hydrogen electrode') of the fuel cell is insufficient, there is a problem in that an electrical potential of the anode increases, thereby causing a reverse voltage (reverse potential) phenomenon in which an overall voltage of the fuel cell becomes negative. Accordingly, the carbon black used as the catalyst carrier is gradually or rapidly oxidized and thus, an electrode structure collapses, thereby reducing fuel cell efficiency and lifespan.

Therefore, it is necessary to improve the tolerance of the anode of the fuel cell against the reverse voltage phenomenon. To this end, there is a need to develop technology to improve the physical properties of carbon black as the catalyst carrier, such as crystallinity, purity, and specific surface area.

**DISCLOSURE**

**TECHNICAL PURPOSE**

In light of the technical problems as described above, a purpose of the present disclosure is to provide carbon black having high crystallinity and high purity and a preparation method thereof.

Furthermore, a purpose of the present disclosure is to provide a preparation apparatus and a preparation method that may efficiently prepare carbon black having high crystallinity and high purity.

Furthermore, a purpose of the present disclosure is to provide a fuel cell anode made of the carbon black having high crystallinity and high purity, and thus, in particular, having significantly improved tolerance against the reverse voltage phenomenon, to provide a membrane electrode assembly (MEA) including the fuel cell anode, and a fuel cell including the MEA.

**TECHNICAL SOLUTION**

In order to achieve the above purposes, one aspect of the present disclosure may provide carbon black having high crystallinity, wherein the carbon black has: a crystallite size (Lc) of 4.0 nm or greater; a specific surface area (BET) of 50 to 150 m'/g; and an oil absorption number (OAN) of 150 ml/100g or greater. The average lattice space d-spacing (002) value of the carbon black as calculated based on X-ray diffraction data may be equal to or smaller than 0.350 nm.

Another aspect of the present disclosure may provide a method for preparing carbon black having high crystallinity, wherein the method comprises: (a) preparing furnace black having a crystallite size (Lc) of 1.0 to 2.0 nm; a specific surface area (BET) of 50 to 150 $m^2$/g; and an oil absorption number (OAN) of 150 ml/100g or greater; and (b) performing high-temperature heat-treatment on the furnace black at a temperature of 1800°C or higher to obtain carbon black having high crystallinity. According to the method, the carbon black having high crystallinity may be prepared which has: a crystallite size (Lc) of 4.0 nm or greater; a specific surface area (BET) of 50 to 150 $m^2$/g; and an oil absorption number (OAN) of 150 ml/100g or greater. The average lattice space d-spacing (002) value of the carbon black as calculated based on X-ray diffraction data may be equal to or smaller than 0.350 nm.

The furnace black in the (a) may be prepared using a carbon black preparation apparatus, wherein the carbon black preparation apparatus includes: (i) at least one supply unit having an air supply and a fuel supply; (ii) a reactor into which high-temperature combustion gas introduced via the supply unit flows; (iii) a throat extending from the reactor and having a smaller diameter than a diameter of the reactor; (iv) a neck extending from the throat and having a larger diameter than a diameter of the throat; and (v) a casing extending from the neck and having a diameter larger than a diameter of the neck, wherein the carbon black preparation apparatus satisfies following conditions (1) and (2):

$$\text{condition (1): } [(\text{neck length } L)/(\text{neck diameter } D)] > 3$$

$$\text{condition (2): } [(\text{throat diameter } D')/(\text{neck diameter } D)] < 0.6.$$

Still another aspect of the present disclosure may provide a membrane electrode assembly comprising an electrode and an electrolyte membrane, wherein the electrode includes: a catalyst carrier made of carbon black having high crystallinity, and a catalyst supported on the catalyst carrier, wherein the carbon black has: a crystallite size (Lc) of 4.0 nm or greater; a specific surface area (BET) of 50 to 150 m$^2$/g; and an oil absorption number (OAN) of 150 ml/100g or greater.

## TECHNICAL EFFECT

Carbon black having high crystallinity in accordance with the present disclosure has very high crystallinity and purity, and may have an appropriate specific surface area.

As the high-quality carbon black in accordance with the present disclosure may be used as the catalyst carrier of the membrane electrode assembly for the fuel cell, the reverse voltage phenomenon of the fuel cell may be reduced or suppressed, thereby improving the tolerance of the fuel cell.

According to the preparation method of carbon black having high crystallinity in accordance with the present disclosure, carbon black having a very high level of crystallinity and purity may be efficiently prepared. When the carbon black preparation apparatus in accordance with the present disclosure is used, carbon black having high crystallinity may be prepared even when furnace black is used as a raw material.

In addition to the above-mentioned effects, the specific effects of the present disclosure are described below along with the description of the specific details for carrying out the present disclosure.

## BRIEF DESCRIPTION OF DRAWINGS

FIG. 1 briefly illustrates a preparation apparatus for preparing carbon black according to one aspect of the present disclosure.

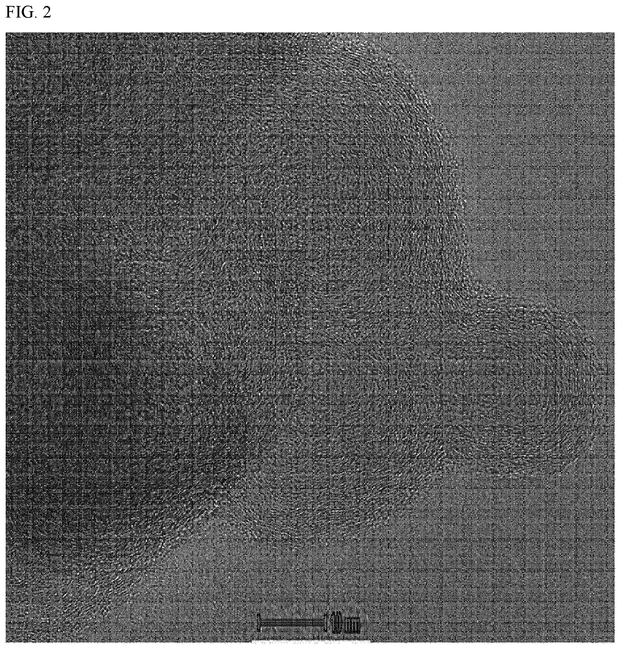

FIG. 2 shows a TEM image of carbon black before heat-treatment according to Comparative Experimental Example 1 of the present disclosure.

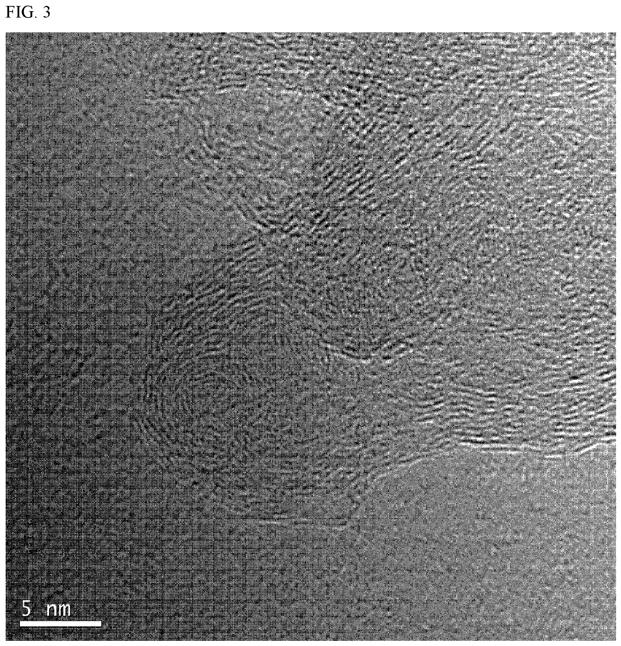

FIG. 3 shows a TEM image of carbon black as heat-treated at 1500°C according to Comparative Experimental Example 3 of the present disclosure.

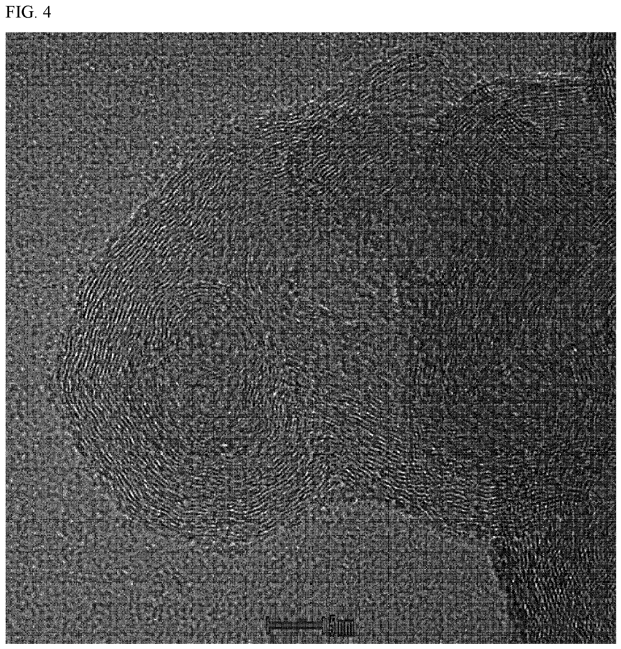

FIG. 4 shows a TEM image of carbon black as heat-treated at 1800°C according to Present Experimental Example 1 of the present disclosure.

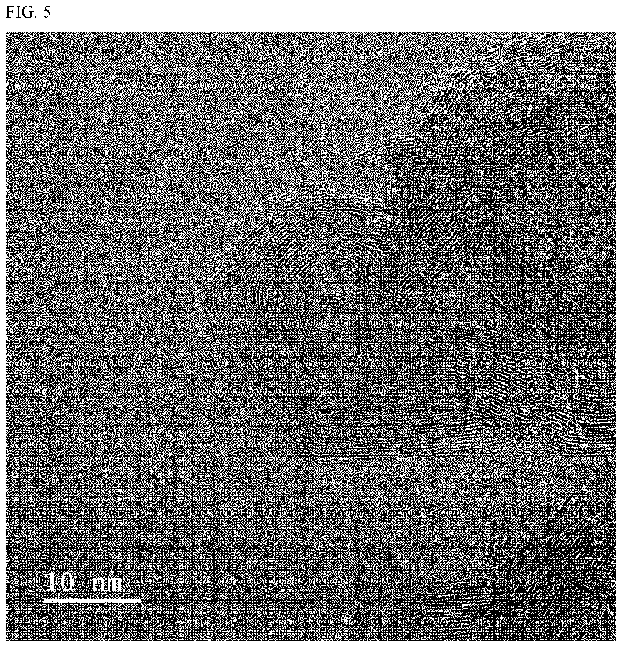

FIG. 5 shows a TEM image of carbon black as heat-treated at 2000°C according to Present Experimental Example 2 of the present disclosure.

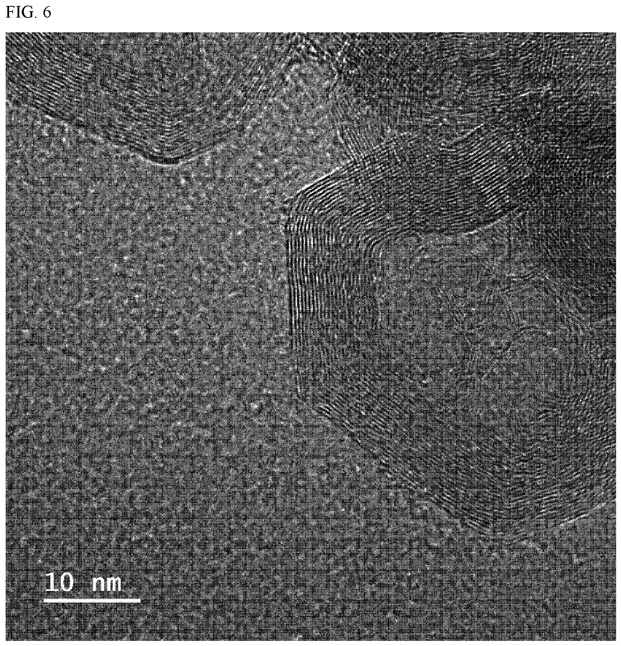

FIG. 6 shows a TEM image of carbon black as heat-treated at 2300°C according to Present Experimental Example 3 of the present disclosure.

## DETAILED DESCRIPTIONS

The above-mentioned purpose, features and advantages are described in detail later with reference to the attached drawings, and accordingly, a person skilled in the art in the technical field to which the present disclosure belongs will be able to easily implement the technical idea of the present disclosure. When describing the present disclosure, upon determination that a detailed description of a known element related to the present disclosure may unnecessarily obscure the gist of the present disclosure, the detailed description thereof is omitted. Hereinafter, preferred embodiments according to the present disclosure will be described in detail with reference to the attached drawings. In the drawings, identical reference numerals are used to indicate identical or similar components.

The description of those that may be sufficiently inferred technically by a person skilled in the art among the contents not described in the present disclosure will be omitted.

It will also be understood that when a first element or layer is referred to as being present "on top of (or under)" a second element or layer, the first element may be disposed directly on top of (or under) the second element or may be disposed indirectly on top of (or under) the second element with a third element or layer being disposed between the first and second elements or layers.

As used herein, the singular constitutes "a" and "an" are intended to include the plural constitutes as well, unless the context clearly indicates otherwise. It will be further understood that the terms "have", "having", "contain", "containing", "include", and "including" when used herein, specify the presence of the stated features, integers, operations, elements, and/or components, but do not preclude the presence or addition of one or more other features, integers, operations, elements, components, and/or portions thereof.

Hereinafter, carbon black having high crystallinity according to the present disclosure will be described in detail.

**Carbon black having high crystallinity**

Carbon black having high crystallinity in accordance with the present disclosure has a crystallite size (Lc) of 4.0 nm or greater; a specific surface area (BET) of 50 to 150 m'/g; and an oil absorption number (OAN) of 150 ml/100g or greater. The carbon black having the high crystallinity may have an average lattice space d-spacing (002) value as calculated based on X-ray diffraction data in a range of 0.350 nm or smaller. The smaller the value, the more preferable.

<Crystallinity - crystallite size (Lc) and average lattice space d-spacing(002)>

The crystallite size (Lc) (having the same meaning as 'crystallite size', 'crystal size', 'a transverse size of crystallite', 'crystallite size in a c-axis direction', etc.) as a factor indicating the crystallinity of a carbon material with a crystal structure may be calculated based on the Scherrer equation as a following [Mathematical Equation 1], and based on X-ray diffraction data analyzed by X-ray diffraction (XRD) (analysis equipment: Panalytical Empyrean Alpha 1):

$$[\text{Mathematical Equation 1] Scherrer equation: } Lc = 0.89\lambda/(\beta \cdot \text{Cos}\theta)$$

In the [Mathematical Equation 1], 0.89 denotes the Scherrer constant, $\lambda$ denotes the wavelength, $\theta$ denotes the angle at the peak of d-spacing (002), and $\beta$ denotes FWHM (full width at half maximum) at the peak of d-spacing (002). The d-spacing (002) refers to the average lattice space calculated based on X-ray diffraction data and is measured based on the X-ray diffraction (XRD) data.

In this regard, a desired crystallinity varies depending on the purpose for which the carbon black is used. Carbon black in accordance with the present disclosure is preferably used as a catalyst carrier used in the membrane electrode assembly of the fuel cell. Thus, the catalyst carrier is required to have a very high level of crystallinity so that even when the fuel cell is used repeatedly and for long-term, the catalyst carrier has excellent tolerance.

The Lc value of carbon black which is conventionally used as the catalyst carrier is approximately 0.5 to 2.0 nm, and thus has some degree of crystallinity but has limitations in realizing a very high level of crystallinity. Furthermore, it is very difficult to achieve such high crystallinity using the furnace black as a raw material. Therefore, the fact that the Lc value of carbon black in accordance with the present disclosure is greater than or equal to 4.0 nm means that it has very excellent crystallinity compared to the conventional carbon black. Further, the carbon black in accordance with the present disclosure may be prepared using the furnace black as a raw material. This may have advantages in terms of cost and process.

Therefore, the Lc of carbon black having the high crystallinity according to the present disclosure that may achieve excellent tolerance and may be used as a catalyst carrier for the fuel cell may be preferably 4.0 nm or greater, and the upper limit thereof is not particularly limited, but is preferably 10.0 nm or smaller.

Furthermore, it is preferable that the average lattice space d-spacing (002) value is 0.350 nm or smaller.

### <Specific surface area (BET)>

Carbon black as the catalyst carrier in accordance with the present disclosure is required to have a high specific surface area so that the catalyst such as platinum (Pt) may be well supported thereon so as to exhibit excellent catalyst activity. When the specific surface area is too high, the Lc value becomes small, and thus crystallinity becomes low, resulting in a trade-off relationship. Thus, it is important to appropriately adjust both the specific surface area and the crystallinity so as to be compatible with each other, depending on the physical properties which a product to which the carbon black is applied requires.

In particular, in order that the carbon black is qualified to be used as a catalyst carrier that requires high tolerance, for example, in the anode electrode of PEMFC or the cathode electrode of PAFC, it is important to achieve high crystallinity by increasing the Lc value while maintaining an appropriate specific surface area. From this point of view, the specific surface area (BET) may be preferably in a range of 50 to 150 $m^2/g$, more preferably in a range of 70 to 120 $m^2/g$, and most preferably in a range of 70 to 100 $m^2/g$.

In one example, the specific surface area (BET) value may be measured according to specific surface area analysis based on nitrogen adsorption using the Brunauer-Emmett-Teller (BET) equation (analysis equipment: Micromeritics ASAP 2460).

### <Oil absorption number (OAN)>

As the oil absorption number (OAN) of carbon black is higher, the carbon black has a higher-dimensional structure. The high-dimensional structure carbon black particle may generally have excellent crystallinity. The oil absorption number is measured according to the analysis method based on ASTM D2414 (measures the amount (ml/100g) of dibutyl phthalate oil adsorbed on 100g of carbon black).

As the oil absorption number (OAN) increases, the electrical conductivity of carbon black increases and the surface resistance decreases. In order that the carbon black is qualified to be used as the catalyst carrier or the conductive material for the fuel cell, it is desirable to use carbon black having high OAN.

From this perspective, the oil absorption number (OAN) of carbon black in accordance with the present disclosure is preferably in a range of 150 mL/100g or greater, and more preferably, 180 mL/100g or greater.

Hereinafter, a preparation method and a preparation apparatus for preparing carbon black having high crystallinity in accordance with the present disclosure are described in detail.

### Preparation method and preparation apparatus for preparing carbon black having high crystallinity

The preparation method for preparing the carbon black having high crystallinity in accordance with the present disclosure may include (a) preparing furnace black having a crystallite size (Lc) of 1.0 to 2.0 nm; a specific surface area (BET) of 50 to 150 $m^2/g$; and an oil absorption number (OAN) of 150 ml/100g or greater; and (b) performing high-temperature heat-treatment on the furnace black at a temperature of 1800°C or higher to obtain carbon black having high crystallinity.

To improve the crystallinity of carbon black, a post-treatment such as high-temperature heat-treatment may be performed. However, when the conventional furnace black as the raw material is heat-treated, there is a limit to significantly improving crystallinity, especially the crystallite size (Lc) value.

Accordingly, based on intensive research, the present inventors have developed the preparation method including heat-treating the furnace black at a high temperature of over 1800°C to improve the crystallite size (Lc) value as an important factor indicating crystallinity, thereby significantly improving the crystallinity.

In this regard, the furnace black before the high-temperature heat-treatment may have the specific surface area (BET) of 50 to 150 m'/g; and the oil absorption number (OAN) of 150 ml/100g or greater as the target physical property according to the present disclosure, and may have the crystallite size (Lc) in a range of 1.0 to 2.0 nm. The high-temperature heat-treatment may be performed on the furnace black before the heat-treatment, such that the crystallite Lc value may be significantly improved.

Furthermore, it is preferable that the furnace black being advantageous in terms of process efficiency may be used as the carbon black before the heat-treatment (carbon black as a raw material). The furnace black may be prepared by inputting air, fuel oil, and hydrocarbon feedstock into a reactor at a temperature of 1500°C or higher and under a condition of incomplete combustion. A flow rate and a type of each of the air, the fuel oil, and the hydrocarbon feedstock may be appropriately selected and adjusted. As long as the physical properties of the furnace black as the raw material for the carbon black of the present disclosure, may be satisfied, the process conditions may be appropriately adjusted according to the needs of a person skilled in the art.

Hereinafter, each of steps of the preparation method according to the present disclosure will be described.

**<Step (a)>**

Specifically, in order to prepare the carbon black that simultaneously satisfies both the excellent crystallinity and the appropriate specific surface area, the crystallite size (Lc) of the furnace black before the heat-treatment may have a crystallite size (Lc) of 1.0 to 2.0 nm; a specific surface area (BET) of 50 to 150 m'/g; and an oil absorption number (OAN) of 150 ml/100g or greater. Because the crystallinity increases mainly via the high-temperature heat-treatment (the specific surface area slightly increases via the high-temperature heat-treatment), it may be preferable that each of the specific surface area and the oil absorption number of the furnace black before the high-temperature heat-treatment is in a range that satisfies the physical properties of the carbon black having high crystallinity as finally prepared.

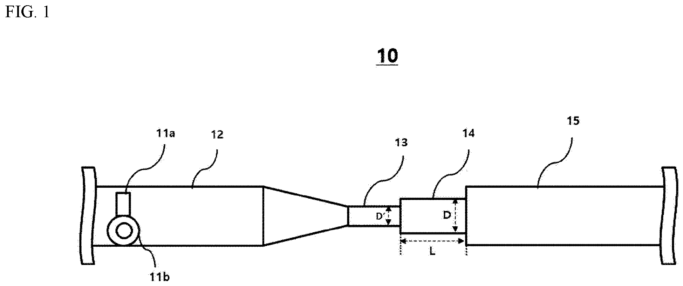

In order to easily prepare the furnace black having the above defined physical properties, a carbon black preparation apparatus 10 as shown in FIG. 1 may be used, wherein the carbon black preparation apparatus 10 may include (i) at least one supply unit 11 with an air supply 11a and a fuel supply 11b; (ii) a reactor 12 into which a high-temperature combustion gas introduced via the supply unit 11 flows; (iii) a throat 13 extending from the reactor 12 and having a smaller diameter than a diameter of the reactor 12; (iv) a neck 14 extending from the throat 13 and having a larger diameter than a diameter of the throat 13; and (v) a casing 15 extending from the neck 14 and having a larger diameter than a diameter of the neck (14), wherein the carbon black preparation apparatus may satisfy following conditions (1) and (2):

$$\text{Condition (1): } [(\text{neck length L})/(\text{neck diameter D})] > 3$$

$$\text{Condition (2): } [(\text{throat diameter D'})/(\text{neck diameter D})] < 0.6$$

When the condition (1) is not satisfied, that is, [(neck length L)/(neck diameter D)] is 3 or smaller, or the condition (2) is not satisfied, that is, [(throat diameter D')/(neck diameter D)] is greater than 0.6, the oil absorption number of the furnace black may be lowered and the specific surface area thereof may be also somewhat lowered. Thus, in this case, even when the heat-treatment is applied thereto, the physical properties of the finally prepared carbon black may not satisfy the target values intended in accordance with the present disclosure.

Furthermore, the furnace black before the heat-treatment in the step (a) as described above may be prepared by inputting the air, the fuel oil, and the hydrocarbon feedstock in the reactor and reacting the mixture with each other therein at a temperature of 1500°C or higher, preferably, 1500 to 1800°C, and under the incomplete combustion condition.

**<Step (b)>**

Carbon black having high crystallinity may be prepared by heat-treating the furnace black as prepared in the step (a) at a high temperature of 1800°C or higher under an inert gas (nitrogen, argon, etc.) atmosphere. In general, when the Lc of carbon black before the heat-treatment is approximately 1.0 to 2.0 nm, the carbon black is considered to have a certain degree of crystallinity, and thus, the heat-treatment is usually performed at a temperature of approximately 500 to 1000°C.

However, in accordance with the present disclosure, in order to significantly improve the crystallinity of carbon black having Lc in the range of 1.0 to 2.0 nm, the heat-treatment at a high temperature of 1800°C or higher is adopted.

When the temperature of the heat-treatment on the carbon black is equal or lower than 1800°C, it is difficult to prepare carbon black having Lc of 5.0 nm or greater. Accordingly, it is difficult to prevent the reverse voltage phenomenon when the carbon black is used as catalyst carrier of the membrane electrode assembly for the fuel cell. Therefore, the heat-treatment temperature at which the carbon black is subjected to the heat-treatment in accordance with the present disclosure is preferably 1800°C or higher, and more preferably 2000°C or higher, but may be selected in consideration of the efficiency of the process.

Hereinafter, a membrane electrode assembly including an electrode including a catalyst carrier made of carbon black having high crystallinity according to the present disclosure and the catalyst supported on the catalyst carrier; and an electrolyte membrane is described.

**Membrane electrode assembly (MEA) containing carbon black having high crystallinity**

Recently, as interest in renewable energy and environmental issues has increased, secondary batteries using lithium ions, and fuel cells which obtains energy by converting chemical energy generated when hydrogen and oxygen combine with each other to create water, into electrical energy are becoming widely used. Depending on the electrolyte, the type of the fuel, and the operating temperature, these fuel cells may be classified into a phosphoric acid fuel cell (PAFC), an alkaline fuel cell (AFC), a molten carbonate fuel cell (MCFC), a solid oxide fuel cells (SOFC), a proton exchange membrane fuel cell (PEMFC), and a direct methanol fuel cell (DMFC).

The membrane electrode assembly (MEA) as an electrode unit of the fuel cell refers to a combination of an electrode and an electrolyte membrane. The electrode includes an anode and a cathode. Each electrode includes the catalyst carrier, and the catalyst for the fuel cell supported on the catalyst carrier. The anode and the cathode bond to each other while the electrolyte membrane is disposed therebetween to form the membrane electrode assembly.

Depending on the type of the fuel cell, the physical properties required on the anode and the cathode vary. For example, very high tolerance of each of the anode in the PEMFC and the cathode in the PAFC is required. Because the carbon black according to the present disclosure has the high crystallinity, the carbon black is highly resistant to corrosion of and damage to the catalyst carrier that occurs during fuel cell operation such that the tolerance of the catalyst in the fuel cell MEA may be improved, and in particular, the reverse voltage phenomenon may be prevented or suppressed, resulting in increased efficiency and lifespan of the fuel cell.

Therefore, the carbon black having high crystallinity according to the present disclosure may be applied to the catalyst carrier of each of the anode in the PEMFC and the cathode in the PAFC. Furthermore, the carbon black having high crystallinity according to the present disclosure may be used as a conductive material that requires high conductivity, high crystallinity, and high purity in secondary batteries using lithium ions, lead acid batteries, and alkaline batteries.

The catalyst of the MEA for the fuel cell in accordance with the present disclosure may be a conventionally used catalyst, and for example, may be selected from platinum or a platinum alloy. When the platinum alloy is used, stability and activity as an electrode catalyst may be further provided. The platinum alloy may preferably include an alloy of platinum and one or more metals selected from the group consisting of platinum group metals other than platinum (e.g., ruthenium, rhodium, palladium, osmium and iridium), gold, silver, chromium, iron, titanium, manganese, cobalt, nickel, molybdenum, tungsten, aluminum, silicon, zinc and tin. The platinum alloy may contain the metal alloyed with platinum, and an intermetallic compound of platinum.

The electrolyte membrane of the MEA in accordance with the present disclosure should have excellent hydrogen ion conductivity and no electron conductivity, and should have lower transfer of the fuel and water compared to transfer of ions, and should have low gas permeability or suppress the gas permeability, and should have excellent physical properties such as high shape stability and oxidation-reduction stability.

The type of the electrolyte membrane as used may vary depending on the type of the fuel cell. In one example, the PEMFC fuel cell may employ a polymer electrolyte membrane, for example, a commercially available Nafion (trade name of Dupont) membrane made of a sulfonate highly fluorinated polymer. The type of the electrolyte membrane is not particularly limited in accordance with the present disclosure.

In particular, in accordance with the present disclosure, it was experimentally identified that when the carbon black in accordance with the present disclosure was used as catalyst carrier of the anode of the PEMFC which has recently increased in demand, the carbon black exhibits excellent suppression of reverse voltage phenomenon and excellent MEA performance.

## Examples

Hereinafter, a composition and an operation of the carbon black, the method and the apparatus of the present disclosure will be described in more detail based on preferred Examples of the present disclosure. However, this is presented as a desirable example of the present disclosure and cannot be interpreted as limiting the present disclosure in any way.

**Present Example 1 and Comparative Example 1** - **Preparation of carbon black before heat-treatment**

In the preparation apparatus which has the same structure as FIG. 1 in accordance with the present disclosure and has an LID value of 3.3 and a D'/D value of 0.53, as shown in a following Table 1, the raw materials such as air, fuel oil, and hydrocarbons feedstock were input to the reactor in which the raw materials reacted with each other under the condition of incomplete combustion and a temperature of 1500°C. Thus, the furnace black was prepared. In this regard, the air flow rate was 4700 Nm$^3$/hr, the fuel oil flow rate was 287 kg/hr, and the hydrocarbon feedstock flow rate was 1910 kg/hr.

The furnace black was prepared under the same condition and manner as those of Present Example 1, except that the preparation apparatus was used which had the LID value of 1.9, and the D'/D value of 0.72, as shown in a following Table 1 of the present disclosure.

Table 1

| Examples | Neck diameter(D) [mm] | Neck length(L) [mm] | Throat diameter(D') [mm] | L/D | D'/D |
|---|---|---|---|---|---|
| Comparative Example 1 | 320 | 600 | 230 | 1.9 | 0.72 |
| Present Example 1 | 320 | 1050 | 170 | 3.3 | 0.53 |

Regarding the furnace black of each of Present Example 1 and Comparative Example 1, the specific surface area, the OAN, the d-spacing (002), the Lc, and the surface resistance were measured using following methods, respectively, and the results are shown in following Table 2.
Table 2

| Examples | Specific surface area [m$^2$/g] | OAN [ml/ 100g] | d-spacing (002) [nm] | Lc [nm] | Surface resistance [Ω] |
|---|---|---|---|---|---|
| Comparativ e Example 1 | 63 | 145 | 0.362 | 1.7 | 37.5 |
| Example 1 | 82 | 195 | 0.362 | 1.7 | 16.8 |

1) Specific surface area: Specific surface area analysis based on nitrogen adsorption using the Brunauer-Emmett-Teller (BET) equation (Analysis equipment: Micromeritics ASAP 2460)
2) OAN: Analysis according to ASTM D2414: the amount (ml/100g) of dibutyl phthalate oil adsorbed on 100g of carbon black was measured.
3) d-spacing (002) and Lc: X-ray diffraction (XRD) analysis (analysis equipment: Panalytical Empyrean Alpha 1), and then, calculation the same using the Scherrer equation as a following [Mathematical Equation 1] based on the analysis result:

$$[\text{Mathematical Equation 1}] \text{ Scherrer equation: } Lc = 0.89\lambda / (\beta \cdot \cos\theta),$$

where λ was 1.540598, β was 4.98, and θ was 24.74 (rad).
4) Surface resistance measurement: we dispersed the carbon black in isopropyl alcohol (IPA) solvent at a content of 10wt% using ultra-sonic to prepare a slurry, and coated the slurry on an aluminum electrode plate using a doctor blade so as to have a thickness of 50 μm. Then, the coated electrode was dried at about 100°C for 1 hour to volatilize the solvent, and then the surface resistance of the electrode surface coated with the carbon black was measured using a resistance meter (Mitsubishi MCP-T610).

As seen from Table 1 and Table 2 above, it was identified that even when the same process conditions and methods were employed, but the value of [(neck length L)/(neck diameter D)] of (= condition (1)) and the value of [throat diameter D')/(neck diameter D)] (= condition (2)) in the preparation apparatus varied, the physical properties of the carbon black prepared varied. As seen from Table 1 and Table 2 above, it was identified that the furnace black before the heat-treatment in accordance with the present disclosure was easily prepared in the preparation apparatus that satisfied both the conditions (1) and (2).

**Present Experimental Examples 1 to 3 and Comparative Experimental Examples 1 to 3: MEA experiment**

(1) Fabrication of MEA

In Comparative Experimental Example 1, the carbon black of Present Example 1 was used while the heat-treatment was not applied thereto.
The commercially available Vulcan XC 72R (Lc: 2.2 nm) was used as carbon black in Comparative Experimental Example 2.

The high-temperature heat-treatment was performed under the temperature and the inert gas (N2) atmosphere as shown in a following Table 3, wherein the carbon black was post-treated (heat-treated) at different heat-treatment temperatures in Comparative Experimental Example 3 and Present Experimental Examples 1 to 3. Then, the MEA was manufactured as follows:

◎ Anode: The same amount of platinum (Pt) catalyst as an amount (by weight) of each carbon black was supported on the each carbon black to prepare the anode.

◎ Cathode: Tanaka 10F50E catalyst was used.

◎ Electrolyte membrane: Nafion 211 from Gore was used.

◎ MEA fabrication: The membrane electrode assembly (MEA) was prepared via thermocompression of the prepared anode, cathode, electrolyte, and electrolyte membrane at a temperature of 130°C and under a pressure of 30kgf/cm$^2$.

Table 3

| Examples | Heat-treatment temperature (°C) |
|---|---|
| Comparative Experimental Example 1 | Carbon black of Present Example 1 was used (No heat-treatment) |
| Comparative Experimental Example 2 | Vulcan XC 72R was used (No heat-treatment) |
| Comparative Experimental Example 3 | 1500 |
| Present Experimental Example 1 | 1800 |
| Present Experimental | 2000 |
| Example 2 | |
| Present Experimental Example 3 | 2300 |

(2) MEA evaluation

The performance and the reverse voltage tolerance of the MEA prepared in each of Present Experimental Examples 1 to 3 and Comparative Experimental Examples 1 to 3 were evaluated in a following manner. The results are shown in a following Table 4.

◎ MEA performance evaluation: The MEA performance was evaluated at temperature 65°C, RH (Relative humidity) 100%, and under a working pressure 1 bar, and a current value at 0.6V voltage was measured on a I-V curve.
◎ Reverse voltage tolerance: Hydrogen supply to the anode of the above MEA was stopped, and then, a current of 1.2A/cm2 was applied thereto, and then, a voltage drop rate after 5 hours was measured.

Table 4

| | Specific surface area [m$^2$/g] | OAN [ml/100g] | d-spacing [nm] | Lc [nm] | MEA performance [A] (@0.6V) | Reverse voltage drop rate [voltage%] |
|---|---|---|---|---|---|---|
| Comparative Experimental Example 1 | 82 | 195 | 0.362 | 1.7 | 1.23 | -22.8 |
| Comparative Experimental Example 2 | 253 | 174 | 0.360 | 2.2 | 1.28 | -20.2 |

(continued)

|  | Specific surface area [m²/g] | OAN [ml/ 100g] | d-spacing [nm] | Lc [nm] | MEA performance [A] (@0.6V) | Reverse voltage drop rate [voltage%] |
|---|---|---|---|---|---|---|
| Comparative Experimental Example 3 | 82 | 194 | 0.351 | 2.6 | 1.23 | -20.3 |
| Present Experimental Example 1 | 78 | 193 | 0.347 | 4.0 | 1.24 | -10.4 |
| Present Experimental Example 2 | 76 | 194 | 0.345 | 4.8 | 1.22 | -6.7 |
| Present Experimental Example 3 | 75 | 192 | 0.345 | 5.2 | 1.24 | -4.8 |

As shown in the Table 4 above, in Present Experimental Examples 1 to 3 in which the high-temperature heat-treatment was performed according to the preparation method of the present disclosure, the carbon block had excellent crystallinity with an Lc of 4.0 nm or greater, and exhibited the specific surface area and OAN values to achieve the target material properties as desired in the present disclosure. Thus, the carbon black was suitable for use in the electrode requiring the tolerance. In fact, the MEA performance was excellent and the absolute value of the reverse voltage drop rate was low, indicating that the carbon black had the effect of preventing the reverse voltage phenomenon excellently.

Although the absolute value of the reverse voltage drop rate varies depending on the specifications of the fuel cell and experimental conditions, the absolute value of the reverse voltage drop rate when the carbon black according to the present disclosure is used is preferably 20% or smaller, more preferably 15% or smaller, and most preferably 10% or smaller.

On the other hand, since in Comparative Experimental Example 1, the carbon black had a very low Lc, the reverse voltage drop rate was high even though the current value of the actual MEA thereof was similar to that of Present Experimental Example 1.

In Comparative Experimental Example 2, the conventionally used carbon black material was used as the carbon black. Although Lc is somewhat high, the specific surface area of the carbon black having such a high Lc tends to be larger. Rather, carbon black having the specific surface area that is too large has weakened the tolerance. Thus, in an actual MEA experiment of Comparative Experimental Example 2, the absolute value of the reverse voltage drop rate was high.

In Comparative Experimental Example 3, the heat-treatment was performed at 1500°C, which was lower than the high-temperature heat-treatment temperature as defined in the method of the present disclosure. In this regard, the Lc value did not reach 4.0 nm, and as a result, the absolute value of the reverse voltage drop rate was high.

The present disclosure has been described above with reference to illustrative drawings. However, the present disclosure is not limited to the embodiments and drawings disclosed in the present disclosure. It is obvious that various modifications may be made by those skilled in the art within the scope of the technical idea of the present disclosure. In addition, even when the effects of the composition of the present disclosure were not explicitly described and explained in the above description of the embodiments of the present disclosure, it is natural that the predictable effects from the composition should also be appreciated.

**Claims**

1.  Carbon black having high crystallinity, wherein the carbon black has:

    a crystallite size (Lc) of 4.0 nm or greater;
    a specific surface area (BET) of 50 to 150 m'/g; and
    an oil absorption number (OAN) of 150 ml/100g or greater.

2.  The carbon black of claim 1, wherein the crystallite size (Lc) is in a range of 5.0 nm inclusive to 10 nm inclusive.

3. The carbon black of claim 1, wherein the specific surface area (BET) is in a range of 70 to 100 m'/g.

4. The carbon black of claim 1, wherein the oil absorption number (OAN) is in a range of 180 ml/100g or greater.

5. The carbon black of claim 1, wherein an average lattice space d-spacing (002) value of the carbon black as calculated based on X-ray diffraction data is equal to or smaller than 0.350 nm.

6. A method for preparing the carbon black having high crystallinity according to one of claims 1 to 5, wherein the method comprises:

(a) preparing furnace black having a crystallite size (Lc) of 1.0 to 2.0 nm; a specific surface area (BET) of 50 to 150 m'/g; and an oil absorption number (OAN) of 150 ml/100g or greater; and
(b) performing high-temperature heat-treatment on the furnace black at a temperature of 1800°C or higher to obtain carbon black having high crystallinity.

7. The method of claim 6, wherein the high-temperature heat-treatment in the (b) is performed at a temperature of 2000°C or higher.

8. The method of claim 6, wherein the furnace black in the (a) is prepared using a carbon black preparation apparatus, wherein the carbon black preparation apparatus includes:

(i) at least one supply unit having an air supply and a fuel supply;
(ii) a reactor into which high-temperature combustion gas introduced via the supply unit flows;
(iii) a throat extending from the reactor and having a smaller diameter than a diameter of the reactor;
(iv) a neck extending from the throat and having a larger diameter than a diameter of the throat; and
(v) a casing extending from the neck and having a diameter larger than a diameter of the neck,
wherein the carbon black preparation apparatus satisfies following conditions (1) and (2):

$$\text{condition (1): [(neck length L)/(neck diameter D)]} > 3$$

$$\text{condition (2): [(throat diameter D')/(neck diameter D)]} < 0.6.$$

9. The method of claim 6, wherein the (a) is performed at a condition of 1500 to 1800°C temperature and under incomplete combustion.

10. A membrane electrode assembly comprising an electrode and an electrolyte membrane, wherein the electrode includes:

a catalyst carrier made of the carbon black having high crystallinity according to one of claims 1 to 5; and
a catalyst supported on the catalyst carrier.

FIG. 1

<u>10</u>

FIG. 2

FIG. 3

5 nm

FIG. 4

FIG. 5

FIG. 6

## INTERNATIONAL SEARCH REPORT

| International application No. |
|---|
| **PCT/KR2022/015602** |

**A. CLASSIFICATION OF SUBJECT MATTER**

**C09C 1/48**(2006.01)i; **C09C 1/56**(2006.01)i

According to International Patent Classification (IPC) or to both national classification and IPC

**B. FIELDS SEARCHED**

Minimum documentation searched (classification system followed by classification symbols)

C09C 1/48(2006.01); B01J 23/42(2006.01); B82B 3/00(2006.01); C09C 1/56(2006.01); H01M 10/0525(2010.01); H01M 4/131(2010.01); H01M 4/86(2006.01); H01M 8/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카본블랙(carbon black), 고결정성(high crystallinity), 비표면적(specific surface area), 열처리(heat treatment)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0018636 A (CABOT CORPORATION) 19 February 2020 (2020-02-19)<br>See paragraph [0099]; and sample C. | 1-10 |
| Y | KR 10-0404809 B1 (M.M.M. S.A. et al.) 16 June 2005 (2005-06-16)<br>See paragraphs [0003]-[0071]; and tables 1-3. | 1-10 |
| A | KR 10-2021-0086802 A (OCI COMPANY LTD.) 09 July 2021 (2021-07-09)<br>See entire document. | 1-10 |
| A | KR 10-2007-0042736 A (SAMSUNG SDI CO., LTD.) 24 April 2007 (2007-04-24)<br>See entire document. | 1-10 |
| A | JP 2017-206568 A (DENKA CO., LTD.) 24 November 2017 (2017-11-24)<br>See entire document. | 1-10 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 February 2023** | **02 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/015602**

| Patent document cited in search report | | | Publication date (day/month/year) | Patent family member(s) | | | Publication date (day/month/year) |
|---|---|---|---|---|---|---|---|
| KR | 10-2020-0018636 | A | 19 February 2020 | CN | 110785880 | A | 11 February 2020 |
| | | | | EP | 3639311 | A1 | 22 April 2020 |
| | | | | EP | 3639311 | B1 | 09 June 2021 |
| | | | | JP | 2020-524192 | A | 13 August 2020 |
| | | | | JP | 6989624 | B2 | 05 January 2022 |
| | | | | KR | 10-2311252 | B1 | 12 October 2021 |
| | | | | US | 10886535 | B2 | 05 January 2021 |
| | | | | US | 2018-0366734 | A1 | 20 December 2018 |
| | | | | WO | 2018-232263 | A1 | 20 December 2018 |
| KR | 10-0404809 | B1 | 16 June 2005 | CN | 1082071 | C | 03 April 2002 |
| | | | | CN | 1148065 | A | 23 April 1997 |
| | | | | EP | 0861300 | A1 | 02 September 1998 |
| | | | | EP | 0861300 | B1 | 29 November 2000 |
| | | | | JP | 11-513051 | A | 09 November 1999 |
| | | | | KR | 10-1999-0028749 | A | 15 April 1999 |
| | | | | WO | 97-03133 | A1 | 30 January 1997 |
| KR | 10-2021-0086802 | A | 09 July 2021 | None | | | |
| KR | 10-2007-0042736 | A | 24 April 2007 | KR | 10-0722093 | B1 | 25 May 2007 |
| | | | | US | 2007-0087262 | A1 | 19 April 2007 |
| JP | 2017-206568 | A | 24 November 2017 | WO | 2016-047775 | A1 | 31 March 2016 |

Form PCT/ISA/210 (patent family annex) (July 2022)